**Europäisches Patentamt**

**European Patent Office**

**Office européen des brevets**

(11) Veröffentlichungsnummer: **0 037 998**
**B1**

(12) **EUROPÄISCHE PATENTSCHRIFT**

(45) Veröffentlichungstag der Patentschrift:
**24.10.84**

(51) Int. Cl.³: **F 24 H 6/00,** F 24 H 9/20, F 28 D 9/00

(21) Anmeldenummer: **81102566.7**

(22) Anmeldetag: **04.04.81**

(54) **Verbrennungs- und Heizeinrichtung mit einem Brenner für gasförmige oder flüssige Brennstoffe.**

(30) Priorität: **14.04.80 DE 3014245**
**14.04.80 DE 3014180**

(43) Veröffentlichungstag der Anmeldung:
**21.10.81 Patentblatt 81/42**

(45) Bekanntmachung des Hinweises auf die Patenterteilung:
**24.10.84 Patentblatt 84/43**

(84) Benannte Vertragsstaaten:
**AT BE CH FR GB IT LI LU NL SE**

(56) Entgegenhaltungen:
**AT - B - 222 266**
**AT - B - 271 697**
**AT - B - 290 705**
**DE - A - 1 801 925**
**DE - C - 443 028**
**DE - C - 642 727**
**US - A - 2 895 719**

(73) Patentinhaber: **Kernforschungsanlage Jülich Gesellschaft mit beschränkter Haftung, Postfach 1913, D-5170 Jülich (DE)**

(72) Erfinder: **Förster, Siegfried, Dr., Ottenfeld, D-5110 Alsdorf (DE)**
Erfinder: **Quell, Peter, Dr., Birkenweg 23, D-5100 Aachen-Haaren (DE)**
Erfinder: **Jaegers, Hubert, Huthmacherstrasse 4, D-5170 Jülich-Welldorf (DE)**

**Beschreibung**

Die Erfindung bezieht sich auf eine Verbrennungs- und Heizeinrichtung mit einem Brenner für gasförmige oder flüssige Brennstoffe, dem ein Rekuperator nachgeschaltet ist, der mit vom Brenner erzeugtem Heissgas im Wärmeaustausch mit einem aufzuheizenden Medium durchströmt ist. Die Verbrennungs- und Heizeinrichtung ist mit einem keramischen Brennerkopf ausgestattet, der zum Brennermund parallel zueinander geführte Strömungskanäle für Brennstoff und Oxidationsmittel mit schlitzförmigem Querschnitt aufweist, die längs ihrer gestreckten Seiten benachbart angeordnet sind. Zur Aufheizung eines Mediums dient ein keramischer Rekuperator, der parallel zueinander geführte Strömungskanäle für vom Brennraum der Verbrennungseinrichtung abströmendes Heissgas und das aufzuheizende Medium aufweist. Die Strömungskanäle des Rekuperators sind ebenfalls schlitzförmig ausgebidlet und längs ihrer gestreckten Seiten benachbart angeordnet. Eine derartige Einrichtung ist nach der DE-A-2 707 290 bekannt.

Verbrennungs- und Heizeinrichtungen dieser Art werden sowohl in Industrieöfen als auch in Wärmeerzeugern kleinerer Einheit für die Heizung von Wohnräumen oder Wohngebäuden oder die Aufbereitung von Warmwasser verwendet. Dabei wird eine hohe Energierückgewinnung aus den vom Brenner erzeugten Heissgasen angestrebt. Dies ist insbesondere dann möglich, wenn das die Wärme abgebende Heissgas unter die Taupunkttemperatur abgekühlt wird. Es ist jedoch dafür Sorge zu tragen, dass das für den Bau der Einrichtung verwendete Material nicht unzulässig korrodiert.

Aufgabe der Erfindung ist es, eine Verbrennungs- und Heizeinrichtung mit der bei hohen Heissgastemperaturen eine Rückgewinnung der Energie bis zur Abkühlung des Heissgases unter die Taupunkttemperatur ohne Korrosionsprobleme erreichbar ist, als kompakte Einrichtung mit geringem Raumbedarf auszubilden.

Diese Aufgabe wird bei einer Verbrennungs- und Heizeinrichtung der eingangs genannten Art durch die im Patentanspruch 1 angegebene Ausbildung gelöst. Der schlitzförmige Strömungskanäle für Brennstoff und Oxidationsmittel aufweisende Brennerkopf und der entsprechend ausgebildete Strömungskanäle für Heissgas und aufzuheizendes Medium aufweisende Rekuperatur sind miteinander zu einem einheitlichen keramischen Block verbunden, wobei zwischen Brennermund des Brennerkopfes und stirnseitigem Heissgaseinlass des Rekuperators ein zu Brennerkopf und Rekuperator fluchtend angeordneter, im Block integrierter Brennraum ausgebildet ist. Brennstoff und Oxidationsmittel treten am Brennermund aus nebeneinanderliegenden schlitzförmigen Mündungen der Störmungskanäle aus und vermischen sich zu einem zündfähigen Gemisch. Das gezündete Gemisch lässt sich in kurzer Flammzone verbrennen. Der angeschlossene keramische Rekuperator erlaubt es, den Brennraum kurz zu halten und das Heissgas in den Rekuperator mit einer Temperatur von über 1000°C eintreten zu lassen. Zugleich ist eine Abkühlung des Heissgases unter den Taupunkt ohne Korrosionsgefahr möglich. Die sich innerhalb der keramischen Störmungskanäle für das Heissgas im Rekuperator niederschlagende Flüssigkeit wird zur Kaltgasseite des Rekuperators geleitet und dort abgeführt.

Die Ausbildung der Verbrennungs- und Heizeinrichtung in der Weise, dass Brennerkopf und Rekuperator miteinander einen einheitlichen keramischen Block bilden, wobei zwischen Brennermund des Brennerkopfes und Heissgaseinlass des Rekuperators ein im Block integrierter Brennraum vorhanden ist, führt zu einem leicht handhabbaren, kompakten Baustein, der gegenüber herkömmlichen Verbrennungs- und Heizeinrichtungen vergleichbarer Leistung einen äusserst geringen Raumbedarf aufweist. Der Brennraum ist nicht gekühlt. Um Wärmeverluste im Brenraum zu vermeiden, sind den Brennraum nach aussen abschliessende Wände mit Wärmeverluste dämmenden Platten aus porenreichem keramischem Werkstoff belegt, Patentanspruch 2.

In weiterer Ausgestaltung der Erfindung ist nach Patentanspruch 3 vorgesehen, dass ein Teil des Rekuperators zur Vorwärmung von dem Brennerkopf zuzuführender Verbrennungsluft dient. Dies ist insbesondere bei Verwendung flüssiger Brennstoffe von Bedeutung und bei Ausbildung des Brennerkopfes in der Weise, dass der Brennstoff in die vorgewärmte Verbrennungsluft verdunstet.

Eine weitgehende Ausnutzung der im Brennraum erzeugten Wärmeenergie für die Heizung und Warmwasserversorgung von Wohnräumen oder Wohngebäuden wird durch die in Patentanspruch 4 angegebene Aufteilung des Rekuperators in zwei vom Heissgas durchströmte Wärmeaustauschzonen gewährleistet. Der Rekuperator weist in Strömungsrichtung des Heissgases gesehen zunächst eine Wärmeaustauschzone auf, in der ein der Gebäudeheizung dienendes Medium erhitzt wird, und im Anschluss daran eine Wärmeaustauschzone zur Erwärmung von Brauchwasser. In der zuletzt erwähnten Wärmeaustauschzone wird das Heissgas unter die Taupunkttemperatur abgekühlt. Um eine Verdampfung des der Gebäudeheizung dienenden Mediums zu vermeiden, sind in den Strömungskanälen für das aufzuheizende Medium in Rekuperator Einbauten zur Umlenkung der Strömung eingesetzt, Patentanspruch 5. Bevorzugt sind solche Einbauten bei Gegenstrom des aufzuheizenden Mediums in dem Teil der Strömungskanäle angebracht, der an der Heissgaseintrittsseite des Rekuperators gelegen ist.

In Patentanspruch 6 und 7 werden Massnahmen zur Abstützung der Strömungskanäle bei Druckdifferenzen zwischen den im Wärmeaustausch stehenden Medien angegeben. Zur optimalen Nutzung der Heizleistung der Verbrennungs- und Heizeinrichtung ist nach Patentanspruch 8 der zur Erwärmung des Brauchwassers dienenden Wärmeaustauschzone des Rekuperators ein Wärmetauscher nachgeschaltet, der von Heizwasser durchströmbar ist. Der Wärmetauscher ist über einen Bypass zwischen Vorlaufleitung und Rücklaufleitung am Heizwasserkreislauf angeschlossen. Der Wärmeaustausch zwischen Heizwasser und Brauchwasser wird von zwei Reglern gesteuert, wovon der eine in Abhängigkeit von der Temperatur im Speicherbehälter für Warmwasser die Durchflussmenge des Heizwassers im Wärmetauscher steuert, der andere in Abhängigkeit von der Temperatur des Heizwassers in der Vorlaufleitung die Brennstoffzufuhr zum Brennerkopf sowie die den Rekuperator durchsetzende Heissgasmenge reguliert. Mit dieser Ausbildung der Heizeinrichtung ist es in vorteilhafter Weise möglich, den von der Jahreszeit abhängigen Energiebedarf für Heizungszwecke und den Bedarf von warmem Brauchwasser bei niedrigstem Brennstoffverbrauch zu decken.

Die erfindungsgemässe Verbrennungseinrichtung ist mit Vorteil für die Schadgasverbrennung einsetzbar, Patentanspruch 9. Bei der Schadgasverbrennung dient der Rekuperator zur Vorerhitzung des Schadgases, bevor dieses in den Brennraum gelangt. Je nach Wärmeentwicklung im Brennraum lässt sich gegebenenfalls nach Vorerhitzen des Schadgases noch verbleibende Restwärme zur Erzeugung von Warmwasser nutzen, Patentanspruch 10. Auch in diesem Falle kann das Heissgas im Rekuperator bis unter Taupunkttemperatur abgekühlt werden. Eine bevorzugte Ausbildung eines für die Schadgasverbrennung geeigneten Rekuperators besteht darin, die Strömungskanäle, in denen das Schadgas vorgewärmt wird, zum Brennraum hin in der Weise zu öffnen, dass das Schadgas gleichmässig über die Flammenfront verteilt in den Brennraum eintritt, Patentanspruch 11.

Die Erfindung wird anhand von Ausführungsbeispielen, die in der Zeichnung schematisch wiedergegeben sind, näher erläutert. Es zeigen im einzelnen:

Fig. 1 Längsschnitt einer Heizeinrichtung mit keramischem Brennerkopf für gasförmigen Brennstoff und keramischem Rekuperator mit zwei Wärmeaustauschzonen, gemäss Schnittlinie I/I nach Fig. 2.

Fig. 2 Querschnitt durch einen Brennerkopf und Rekuperator der Heizeinrichtung nach Fig. 1 gemäss Schnittlinie II/II.

Fig. 3 Heizeinrichtung mit keramischem Brennerkopf für flüssigen Brennstoff und keramischem Rekuperator mit Vorerhitzungsteil für die Verbrennungsluft und einer Wärmeaustauschzone zur Aufbereitung von Warmwasser.

Fig. 4 Verbrennungseinrichtung zur Schadgasverbrennung mit keramischem Brennerkopf für gasförmigen Brennstoff und keramischem Rekuperator zur Schadgasvorerhitzung sowie zur Aufbereitung von Warmwasser.

Fig. 5 Heizwasser- und Brauchwasserkreislauf für eine erfindungsgemässe Heizeinrichtung.

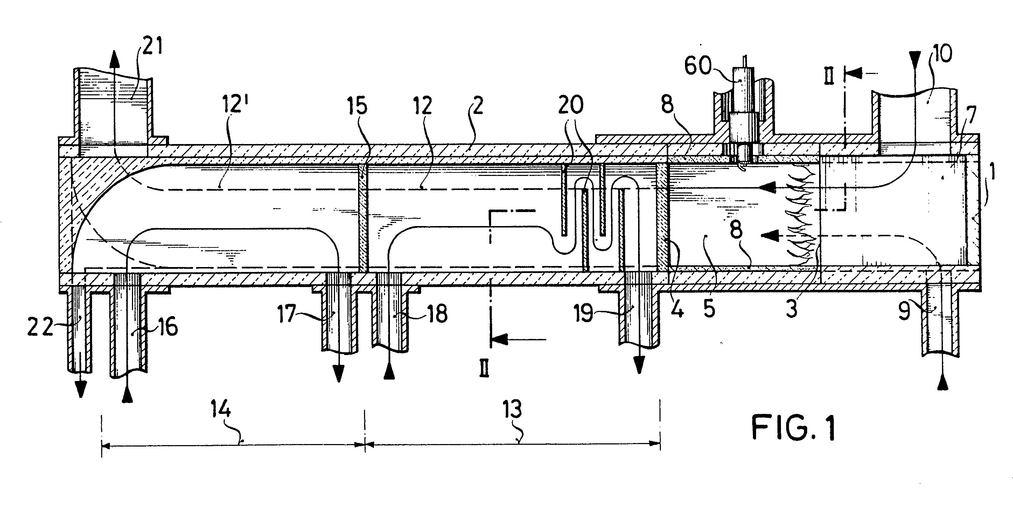

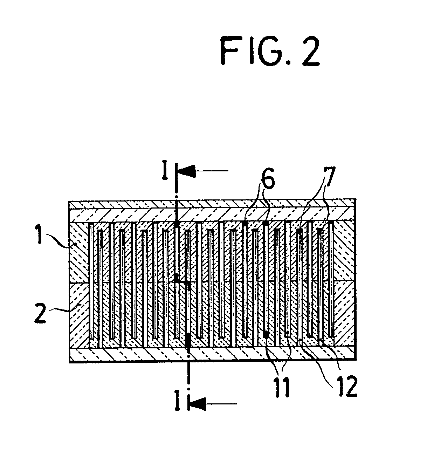

Die in der Zeichnung wiedergegebenen Verbrennungs- und Heizeinrichtungen weisen jeweils einen keramischen Brennkopf 1 und einen aus gleichem Material bestehenden Rekuperator 2 auf, die zu einem einheitlichen keramischen Block in der Weise zusammengefügt sind, dass zwischen Brennermund 3 des Brennerkopfes 1 und Heissgaseinlass 4 des Rekuperators 2 ein kurzer ungekühlter Brennraum 5 ausgebildet ist, vgl. Fig. 1. In den Brennraum ragt eine Zündeinrichtung 60 für den Start der Verbrennungs- und Heizeinrichtung hinein. Brennerkopf 2 und Rekuperator 2 weisen eine Vielzahl parallel geführter Strömungskanäle mit schlitzförmigem Strömungsquerschnitt auf und sind hinsichtlich der Anordnung der Strömungskanäle gleich aufgebaut. In Fig. 2 ist ein Halbschnitt von Brennerkopf 1 und Rekuperator 2 gemäss Schnittlinie II/II nach Fig. 1 gezeigt. Daraus ist ersichtlich, dass im Brennerkopf 1 nebeneinander Strömungskanäle 6 für Brennstoff und Strömungskanäle 7 für Verbrennungsluft angeordnet sind. Die Strömungskanäle 6 und 7 münden am Brennermund 3 derart, dass Brennstoff und Verbrennungsluft auf der gesamten Brennermundfläche intensiv miteinander vermischt werden und in einer kurzen Verbrennungszone, deren Flammenfront der Brennermundfläche entspricht und den gesamten Brennraum 5 ausfüllt, verbrennen. Um Wärmeverluste zu vermeiden, ist der ungekühlte Brennraum mit Isolierplatten 8 ausgelegt. Die Isolierplatten bestehen aus porösem, keramischem Werkstoff.

Den Strömungskanälen 6 wird im Ausführungsbeispiel nach Fig. 1 gasförmiger Brennstoff über eine Brennstoffleitung 9 zugeführt, die Verbrennungsluft strömt über eine Zuführung 10 in die Strömungskanäle 7 des Brennerkopfes ein. Brennstoffleitung 9 und Zuführung 10 sind am Brennerkopf 1 seitlich angeschlossen.

Im keramischen Rekuperator 2 sind Strömungskanäle 11 für Heissgas und Strömungskanäle 12 für ein im Wärmeaustausch mit dem Heissgas stehendes Medium benachbart angeordnet. Das Heissgas wird auf der dem Brennraum 5 zugewandten Stirnseite des Rekuperators am Heissgaseinlass 4 eingeführt. Die Störmungskanäle 11 sind an dieser Stirnseite des Rekuperators geöffnet. Im Ausführungsbeispiel wird in einer ersten Wärmeaustauschzone 13 des Rekuperators 1 Wasser erhitzt, das Heizungszwecken dient. Das Wasser strömt in den Strömungskanälen 12 der Wärmeaustauschzone 13 in Gegenstrom zum Heissgas. In einer zweiten Wärmeaustauschzone 14 des Rekuperators wird in Strömungskanälen 12', die von den Strömungskanälen 12 durch Zwischenwände 15 getrennt sind, Brauchwasser erwärmt. Ein Brauchwassereinlass 16 ist in Strömungsrichtung des Heissgases gesehen am Ende des Rekuperators 2 vorgesehen. In Fig. 1 ist die Strömungsrichtung des Heissgases durch einen mit gestrichelten Linien markierten Strömungspfeil gekennzeichnet. Die Strömungsrichtung für das Wasser ist in den Wärmeaustauschzonen 13 und 14 mit durchgezogen gezeichneten Pfeilen angegeben. Nach seiner Erwärmung in der Wärmeaustauschzone 14 verlässt das Brauchwasser den Rekuperator 2 am Brauchwasseraustritt 17. Das Heizungszwecken dienende Wasser wird der Wärmeaustauschzone 13 über eine Rücklaufleitung 18 zugeführt und strömt nach Erhitzung in eine Vorlaufleitung 19 ein. Um eine Verdampfung des Wassers zu vermeiden, weisen die Strömungskanäle 12 in ihrem dem Heissgaseinlass 4 zugewandten Teil Einbauten 20 zur Umlenkung der Strömung des Heizwassers auf. Alle Zu- und Ableitungen für Heizwasser und Brauchwasser sind seitlich am Rekuperator 2 angeschlossen. Die Strömungskanäle 12 und 12' verlaufen im Rekuperator fluchtend und sind an der Stelle, an der die Wärmeaustauschzone 13 an die Wärmeaustauschzone 14 angrenzt, durch die eingesetzten Zwischenwände 15 voneinander getrennt.

Die Strömungskanäle 11 für das Heissgas durchziehen beide Wärmeaustauschzonen 13, 14 des Rekuperators. Das Heissgas strömt am Ende der Wärmeaustauschzone 14 über einen Gasauslass 21 ab. Es wird in der Wärmeaustauschzone 14 bis unter die Taupunkttemperatur abgekühlt. Das sich dabei in den Strömungskanälen 11 niederschlagende Kondensat wird über einen Kondensatablauf 22 abgeführt.

Die in Fig. 1 und 2 dargestellte Heizeinrichtung ist für eine Heizleistung von mehreren Kilowatt ausgelegt. Insgesamt weist der keramische Block einschliesslich Brennerkopf und Rekuperator eine Baulänge von etwa 55 cm auf. Brennerkopf und Rekuperator sind derart miteinander verbunden, dass zwischen Brennerkopf und stirnseitig vorgesehenem Heissgaseinlass des Rekuperators der Brennraum fluchtend zu Brennerkopf und Rekuperator angeordnet ist. Dies optimiert die Strömungsführung des im Brennraum am Brennermund gebildeten Heissgases zum Heissgaseinlass des Rekuperators und vermeidet unsymmetrische thermische Belastungen.

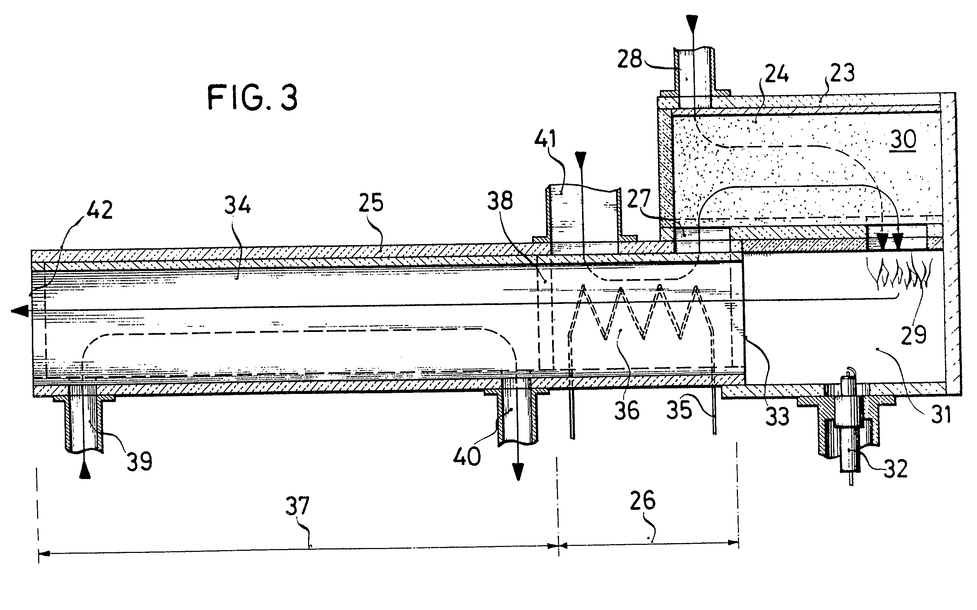

Fig. 3 zeigt eine Heizeinrichtung mit einem keramischen Brennerkopf 23 für flüssigen Brennstoff. Hinsichtlich der Anordnung der Strömungskanäle für Brennstoff und Oxidationsmittel ist der Brennerkopf 23 in gleicher Weise wie der Brennerkopf 1 im Ausführungsbeispiel nach Fig. 1 und 2 ausgebildet und weist eine Vielzahl benachbarter Kanäle mit schlitzförmigem Querschnitt auf. In Fig. 3 ist im Längsschnitt ein Verbrennungsluftkanal 24 sichtbar. Der Brennerkopf 23 ist zum Rekuperator 25 versetzt angeordnet und derart angeschlossen, dass in einer Vorwärmzone 26 im Rekuperator erhitzte Verbrennungsluft am Übergang 27 unmittelbar in die Verbrennungsluftkanäle 24 des Rekuperators überströmen kann. Am Anschluss 28 wird dem Brennerkopf 23 flüssiger Brennstoff zugeführt. Die in Fig. 3 nicht sichtbaren Brennstoffkanäle des Brennerkopfes sind am Brennermund 29 verschlossen. Der Brennerkopf 23 weist zwischen den Verbrennungsluftkanälen 24 und den Brennstoffkanälen poröse Trennwände 30 auf, die für den Brennstoff durchlässig sind. In Fig. 3 ist eine der porösen Trennwände 30 als punktierte Fläche markiert. Auf der den Verbrennungsluftkanälen 24 zugewandten Oberfläche der Trennwände 30 verdunstet der die Trennwände durchdringende Brennstoff in die vorgewärmte Verbrennungsluft und vermischt sich mit dieser zu einem zündfähigen Brennstoff-Verbrennungsluft-Gemisch. Das Gemisch wird im Ausführungsbeispiel seitlich in einen vor dem Rekuperator 25 angeordneten Brennraum 31 eingeführt, der im einheitlichen keramischen Block mit Brennerkopf 23 und Rekuperator 25 zwischen Brennermund 29 und Heissgaseinlass 33 des Rekuperators 25 ebenfalls integriert ist. In den Brennraum 31 ragt für den Start des Brenners eine Zündeinrichtung 32 hinein.

Das im Brennraum 31 erzeugte Heissgas wird im Rekuperator in gleicher Weise wie beim Ausführungsbeispiel nach Fig. 1 und Fig. 2 in Heissgaskanälen 34 geführt, die an einer dem Brennraum 31 zugewandten Stirnseite, am Heissgaseinlass 33 des Rekuperators geöffnet sind. In der bereits oben erwähnten Vorwärmzone 26 des Rekuperators wird die dem Brennerkopf 23 zuzuführende Verbrennungsluft vorgewärmt. Die Vorwärmzone 26 weist deshalb auch eine elektrische Widerstandsheizung 35 auf, die beim Kaltstart der Heizeinrichtung eingeschaltet wird, um die Verbrennungsluft soweit vorzuwärmen, dass sich im Brennerkopf durch Verdunsten von Brennstoff ein zündfähiges Gemisch ausbilden kann. Im Ausführungsbeispiel ist als elektrische Widerstandsheizung in einfachster Weise ein elektrischer Heizdraht in die Verbrennungsluftkanäle eingeführt. Der Heizdraht ist an eine in der Zeichnung nicht dargestellte Spannungsquelle anschliessbar. Zur Aufheizung der Verbrennungsluft beim Kaltstart lassen sich jedoch auch die zwischen den Störmungskanälen für Verbrennungsluft und Heissgas in der Vorwärmzone 26 vorhandenen Trennwände 36 nutzen. Zu diesem Zweck bestehen die Trennwände 36 aus keramischem, elektrisch leitendem Material. Die elektrische Widerstandsheizung 35 ist lediglich während der Startphase der Heizeinrichtung in Betrieb. Ist in der Vorwärmzone die Betriebstemperatur erreicht, so wird die Widerstandsheizung 35 abgeschaltet.

Im Anschluss an die Vorwärmzone 26 durchströmt das Heissgas im Rekuperator 25 eine Wärmeaustauschzone 37 zur Erwärmung von Wasser. Die Strömungskanäle für das Wasser und die Strömungskanäle für die vorzuwärmende Verbrennungsluft sind im Rekuperator 25 fluchtend angeordnet. In Fig. 3 sind die Strömungskanäle nicht sichtbar. Gestrichelt ist lediglich ein Verschlussstück 38 zwischen den Strömungskanälen eingezeichnet, das zugleich die Grenze zwischen der Vorwärmzone 26 des Rekuperators und der Wärmeaustauschzone 37 erkennen lässt. Das zu erwärmende Wasser wird in die Wärmeaustauschzone 37 am Zufluss 39 eingeführt und aus dem Rekuperator am Austritt 40 entnommen. Die Verbrennungsluft strömt in die Vorwärmzone 26 des Rekuperators über die Öffnung 41 ein und verlässt die Vorwärmzone, wie bereits angegeben, am Übergang 27 zum Brennerkopf 23.

Das Heissgas durchströmt sowohl die Vorwärmzone 26 als auch die Wärmeaustauschzone 37 des Rekuperators in Heissgaskanälen 34 vom Heissgaseinlass 33 bis zum entgegengesetzt liegenden Gasauslass 42. Es wird im Rekuperator bis unter die Taupunkttemperatur abgekühlt. Das dabei in den Heissgaskanälen 34 gebildete Kondensat wird am Ende des Rekuperators am Gasauslass 42 in einer in Fig. 3 nicht dargestellten Kondensatleitung aufgefangen und abgeführt.

Die Heizeinrichtung nach Fig. 3 ist für eine Heizleistung von mehreren Kilowatt ausgelegt. Insgesamt weist der einheitliche keramische Block mit Brennerkopf und Rekupertor eine Baulänge von etwa 50 cm aus.

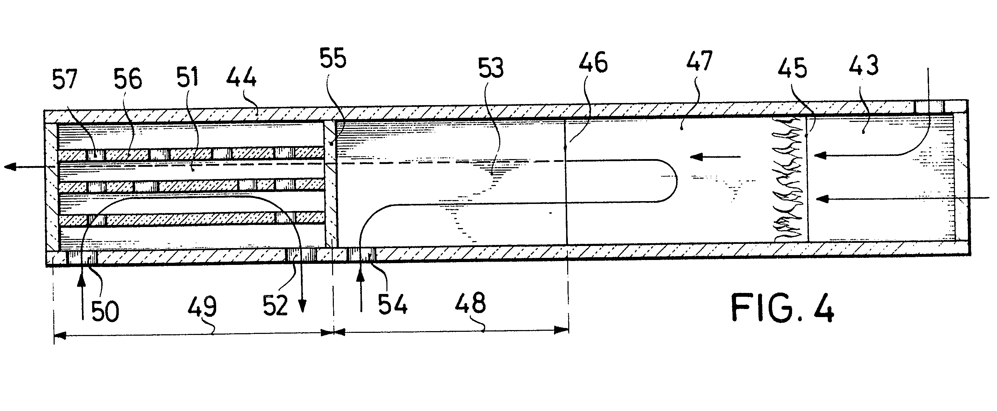

In Fig. 4 ist schematisch eine Verbrennungseinrichtung dargestellt, die zum Verbrennen von Schadgas geeignet ist. Auch diese Verbrennungseinrichtung besteht aus einem einheitlichen keramischen Block mit Brennerkopf 43, Rekupertor 44 und zwischen Brennermund 45 des Brennerkopfes und Heissgaseinlass 46 des Rekuperators liegenden, im Block integrierten, Brennraum 47. Hinsichtlich Form und Anordnung der Strömungskanäle sind Brennerkopf 43 und Rekuperator 44 in gleicher Weise ausgebildet, wie Brennerkopf 1 und Rekuperator 2 des Ausführungsbeispieles nach Fig. 1 und 2. Dem Brennerkopf 43 wird gasförmiger Brennstoff zugeführt. Der Rekuperator 44 weist eine Aufheizzone 48 für Schadgas und eine Wärmeaustauschzone 49 zur Erzeugung von Warmwasser auf. Das Wasser strömt dem Rekuperator am Wasserzulauf 50 zu und wird nach Durchlauf von Wasserkanälen 51 am Ablauf 52 entnommen. Das Schadgas wird in Schadgaskanälen 53 des Rekuperators 44 am Anschluss 54 eingeführt. Zwischen den Wasserkanälen 51 und den Schadgaskanälen 53 sind die Strömungsräume von Wasser und Schadgas gegeneinander abdichtende Verschlussstücke 55 eingesetzt.

Die im Rekuperator parallel und benachbart zu den in Fig. 4 nicht sichtbaren Strömungskanälen für das aus dem Brennraum 47 abströmende Heissgas geführten Schadgaskanäle 53 münden am Heissgaseinlass 46 unmittelbar neben den Öffnungen der Strömungskanäle für das Heissgas. Das vorgewärmte Schadgas strömt auf diese Weise unmittelbar auf die im Brennraum 47 gebildete Flammenfront auf. Es wird gleichmässig über der Flammenfront verteilt in den Brennraum eingeführt. Bei einer solchen Verteilung des Schadgases über der Flammenfront wird in vorteilhafter Weise ein hoher Verbrennungsgrad des Schadgases erreicht. Dies gelingt bei geringem Brennraumvolumen insbesondere dann, wenn Brennermundfläche und Fläche des Rekuperators auf der Heissgaseintrittsseite gleich gross bemessen sind, das vorgewärmte Schadgas also über die gesamte Querschnittsfläche des Brennraums verteilt im Gegenstrom zum Heissgas in den Brennraum eintritt. Wegen der Rückleitung von erwärmtem Schadgas unmittelbar aus dem Brennraum wird eine gleichmässige Temperaturverteilung am Heissgaseinlass 46 der Aufheizzone 48 erzielt.

Die Wasserkanäle 51 und die Heissgaskanäle in der Wärmeaustauschzone 49 des Rekuperators 44 weisen in Strömungsrichtung des Wassers bzw. des Heissgases verlaufende Wandstützen 56 für die Trennwände der Strömungskanäle auf. Wandstützen 56 sind in den Strömungskanälen insbesondere dann erforderlich, wenn zwischen den im Wärmeaustausch stehenden Medien erhebliche Druckunterschiede bestehen. In den Wasserkanälen 51 zwischen Wasserzulauf 50 und -ablauf 52 sind in den Wandstützen 56 Durchströmöffnungen 57 in der Weise vorgesehen, dass eine effektive Verteilung des Wassers in den Strömungskanälen und eine entsprechende Zusammenführung erfolgt. In der Wärmeaustauschzone 49 des Rekuperators wird das Heissgas in gleicher Weise wie bei allen vorangegangenen Ausführungsbeispielen bis unter die Taupunkttemperatur abgekühlt.

Eine für eine Leistung von mehreren Kilowatt ausgelegte Verbrennungseinrichtung zum Verbrennen von Schadgas weist einschliesslich Brennerkopf, integriertem Brennraum und Rekuperator mit Wärmeaustauschzone zur Erwärmung von Wasser eine Baulänge von etwa 60 cm auf.

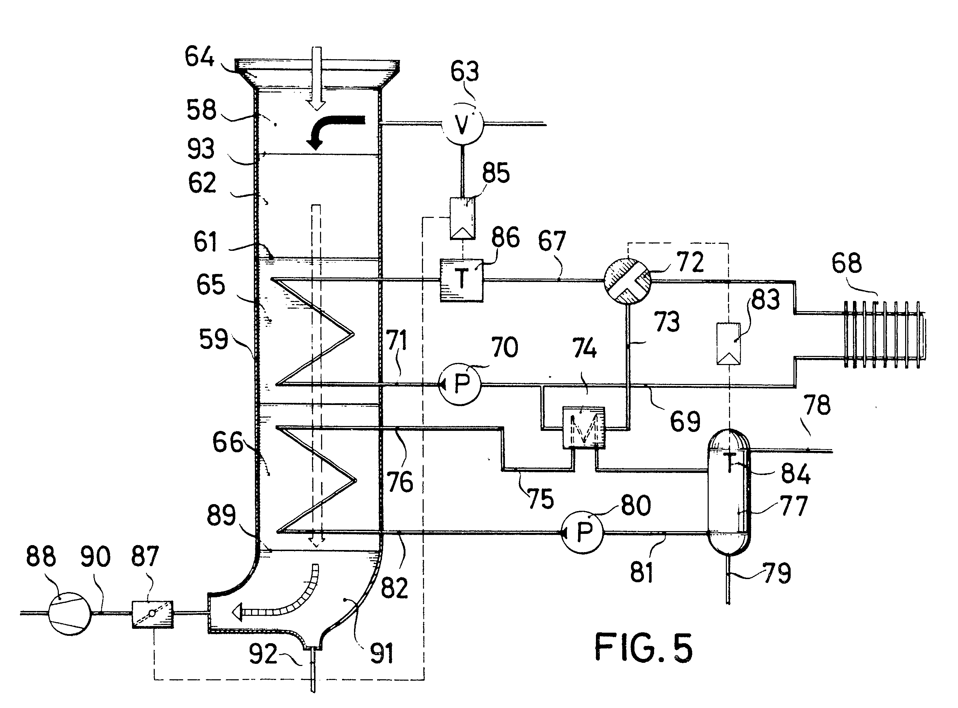

Eine Heizeinrichtung mit Heizwasser- und Brauchwasserkreislauf ist in Fig. 5 dargestellt.

Die Heizeinrichtung weist einen keramischen Brennerkopf 58 sowie einen keramischen Rekuperator 59 auf, die zu einem einheitlichen keramischen Block in der Weise zusammengefügt sind, dass zwischen Brennermund 93 des Brennerkopfes 58 und Heissgaseinlass 61 des Rekuperators 59 ein Brennraum 62 im Block integriert ist. Brennerkopf 58 und Rekuperator 59 weisen wie in den vorgenannten Ausführungsbeispielen nach Fig. 1 bis 4 eine Vielzahl parallel geführter Strömungskanäle mit schlitzförmigem Strömungsquerschnitt auf. Hinsichtlich der Anordnung der Strömungskanäle sind Brennerkopf und Rekuperator gleich aufgebaut. Dem Brennerkopf wird über die regelbare Brennstoffzuführung 63 im Ausführungsbeispiel gasförmiger Brennstoff und über einen Einlass 64 Verbrennungsluft zugeführt. Soll statt gasförmigem Brennstoff ein flüssiger Brennstoff verwendet werden, so weist der Brennerkopf 58 Strömungskanäle mit porösen Trennwänden auf, die vom Brennstoff durchdrungen werden können. In den Brennerkopf wird vorgewärmte Verbrennungsluft eingeführt, in die der Brennstoff von der Oberfläche der porösen Wände aus verdunstet.

Der Rekuperator 59 weist zwei Wärmeaustauschzonen 65, 66 auf. In Strömungsrichtung des Heissgases gesehen, die in Fig. 5 als ein mit gestrichelten Linien markierter Pfeil angegeben ist, folgt auf den Brennraum 62 als erste Wärmeaustauschzone 65 eine Heizungszwecken dienende Zone zur Erwärmung von Heizwasser. In der zweiten Wärmetauschzone 66 wird Brauchwasser erwärmt.

An der Wärmeaustauschzone 65 ist im Bereich des Heissgaseinlasses 61 eine Vorlaufleitung 67 angeschlossen, mit der das in der Wärmeaustauschzone 65 im Gegenstrom zum Heissgas geführte Heizwasser zu Heizkörpern 68 geführt wird. Nach Durchlauf der Heizkörper 68 strömt das Heizwasser in einer Rücklaufleitung 69 von einer Förderpumpe 70 gefördert zum Heizwassereintritt 71 am Rekuperator 59 zurück. Zwischen Vorlaufleitung 67 und Rücklaufleitung 69 des Heizwassersystems ist über ein Dreiwegventil 72 ein Bypass 73 angeschlossen, der zu einem Wärmetauscher 74 zur Erwärmung von Brauchwasser führt.

Das Brauchwasser strömt zum Wärmetauscher 74 über eine Warmwasserleitung 75, die am Brauchwasseraustritt 76 der Wärmeaustauschzone 66 des Rekuperators 59 angeschlossen ist. Die Wärmeaustauschzone 66 und der Wärmetauscher 74 sind hintereinander geschaltet und werden vom Brauchwasser im Gegenstrom zum Heissgas bzw. im Gegenstrom zum Heizwasser durchsetzt. Die Warmwasserleitung 75 mündet in einen Speicherbehälter 77 für warmes Wasser, aus dem über eine Brauchwasserleitung 78 je nach Bedarf warmes Wasser entnehmbar ist. Frischwasser erhält der Speicherbehälter 77 über eine Zuleitung 79. Im Ausführungsbeispiel wird das Brauchwasser von einer Förderpumpe 80, die in einer Verbindungsleitung 81 zwischen Speicherbehälter 77 und Brauchwassereintritt 82 an der Wärmeaustauschzone 66 des Rekuperators 59 eingesetzt ist, im Kreislauf gefördert.

Zur Regelung der Heizeinrichtung dient ein Regler 83, der in Abhängigkeit von der von einem Thermostaten 84 gemessenen Temperatur im Speicherbehälter 77 das Dreiwegeventil 72 einstellt, und ein Regler 85, der Brennstoffzufuhr und Heissgasmenge in Abhängigkeit von der Temperatur des Heizwassers in der Vorlaufleitung 67 steuert. Die Temperatur in der Vorlaufleitung 67 wird von einem in der Vorlaufleitung eingesetzten Thermostaten 86 gemessen. Der Regler 85 stellt die Brennstoffzufuhr 63 ein und steht in Wirkverbindung mit einer Drosselklappe 87, die vor einem Sauggebläse 88 in einer am Gasauslass 89 des Rekuperators 59 angeschlossenen Abgasleitung 90 eingesetzt ist. In Abhängigkeit von der Stellung der als Durchflussregler eingesetzten Drosselklappe 87 wird die den Rekuperator durchströmende Heissgasmenge und zugleich die dem Brennerkopf 58 zugeführte Verbrennungsluftmenge geregelt.

In der Wärmeaustauschzone 66 wird das Heissgas bis unter die Taupunkttemperatur abgekühlt. Das dabei in den Strömungskanälen für das Heissgas gebildete Kondensat wird in einer am Gasauslass 89 des Rekuperators 59 angebrachten Wanne 91 aufgefangen und fliesst über eine Kondensatleitung 92 aus der Heizeinrichtung ab.

Vom Regler 85 wird der Betriebszustand der Heizungseinrichtung für eine vorgegebene Vorlauftemperatur des Heizwassers so bestimmt, dass ein Dauerbetrieb des Brennerkopfes möglich ist. Der Speicherbehälter 77 ist derart ausgelegt, dass kurzzeitig mehr warmes Brauchwasser entnehmbar ist, als bei maximaler Leistung der Heizeinrichtung erzeugt werden kann. Dabei wird davon ausgegangen, dass das Wasser im Speicherbehälter 77 jeweils in den Zeitabschnitten, in denen keine Warmwasserentnahme erfolgt, von der Heizeinrichtung wieder erwärmt wird.

Um die Heizeinrichtung auch dann betreiben zu können, wenn nur Heizwasser für die Heizkörper 68 benötigt wird, ist die Wärmeaustauschzone 65 so ausgelegt, dass das Heissgas bei Eintritt in die Wärmeaustauschzone 66 schon soweit abgekühlt ist, dass eine Verdampfung des in der Wärmeaustauschzone 66 stehenden Brauchwassers nicht eintritt. Der Brauchwasserkreislauf kann abgestellt werden.

**Patentansprüche**

1. Verbrennungs- und Heizeinrichtung mit einem keramischen Brennerkopf mit zum Brennermund parallel zueinander geführten Strömungskanälen für Brennstoff und Oxidationsmittel, die einen schlitzförmigen Querschnitt aufweisen und längs ihrer gestreckten Seiten benachbart angeordnet sind, und einem keramischen Rekuperator mit parallel zueinander geführten schlitzförmigen Strömungskanälen für vom Brennraum abströmendes Heissgas und für ein aufzuheizendes Medium, die ebenfalls längs ihrer gestreckten Seiten benachbart angeordnet sind, dadurch gekennzeichnet, dass Brennerkopf (1, 23, 43) und Rekuperator (2, 25, 44) miteinander derart zu einem einheitlichen keramischen Block verbunden sind, dass zwischen Brennermund (3, 29, 45) des Brennerkopfes und stirnseitigem Heissgaseinlass (4, 33, 46) des Rekuperators ein zu Brennerkopf und Rekuperator fluchtend angeordneter, im Block integrierter Brennraum (5, 31, 47) ausgebildet ist.

2. Verbrennungs- und Heizeinrichtung nach Anspruch 1, dadurch gekennzeichnet, dass den Brennraum (5) nach aussen abschliessende Wände mit Isolierplatten (8) aus porenreichem keramischem Werkstoff belegt sind.

3. Verbrennungs- und Heizeinrichtung nach Anspruch 1 oder 2, dadurch gekennzeichnet, dass der Rekuperator (25) eine der Vorwärmung von Verbrennungsluft dienende Vorwärmzone (26) aufweist.

4. Verbrennungs- und Heizeinrichtung nach einem der Ansprüche 1, 2 oder 3, dadurch gekennzeichnet, dass der Rekuperator (2, 59) in Strömungsrichtung des Heissgases gesehen zunächst eine Wärmeaustauschzone (13, 65) zur Erhitzung eines Heizungszwecken dienenden Mediums und im Anschluss daran eine Wärmeaustauschzone (14, 66) zur Erwärmung von Brauchwasser aufweist.

5. Verbrennungs- und Heizeinrichtung nach einem der vorhergehenden Ansprüche, dadurch gekennzeichnet, dass der Rekuperator (2) in den das aufzuheizende Medium führenden Strömungskanälen (12) Einbauten (20) zur Strömungsumlenkung aufweist.

6. Verbrennungs- und Heizeinrichtung nach einem der vorhergehenden Ansprüche, dadurch gekennzeichnet, dass in Strömungskanälen (51, 53) des Rekuperators (44) Wandstützen (56) eingesetzt sind.

7. Verbrennungs- und Heizeinrichtung nach Anspruch 6, dadurch gekennzeichnet, dass die Wandstützen (56) als in Strömungsrichtung der Medien verlaufende Stege ausgebildet sind, die zumindest im Bereich des Zu- und Ablaufs (50, 52, 54) des Mediums Durchströmöffnungen (57) für das Medium aufweisen.

8. Verbrennungs- und Heizeinrichtung nach einem der vorhergehenden Ansprüche, dadurch gekennzeichnet, dass ein den Heissgasstrom steuernder Durchflussregler (87) vorgesehen ist und eine das in der zweiten Wärmeaustauschzone (66) aufbereitete warme Brauchwasser führende Warmwasserleitung (75) über einen vom Heizwasser durchströmbaren Wärmetauscher (74) zu einem Speicherbehälter (77) für Warmwasser geführt ist, dass der Wärmetauscher (74) über einen Bypass (73) zwischen Vorlaufleitung (67) und Rücklaufleitung (69) am Heizwasserkreislauf angeschlossen ist, dass die im Bypass (73) strömende Heizwassermenge von einem Regler (83) in Abhängigkeit von der Temperatur im Speicherbehälter (77) für Warmwasser gesteuert wird und dass ein Regler (85) zur Steuerung der Brennstoffzufuhr zum Brennerkopf (58) und des Heissgasstromes im Rekuperator (59) in Abhängigkeit von der Temperatur des Heizwassers in der Vorlaufleitung (67) vorgesehen ist.

9. Verwendung einer Verbrennungseinrichtung nach einem der vorhergehenden Ansprüche für Schadgasverbrennung, wobei der Rekuperator (44) zur Vorerhitzung des in den Brennraum (47) einzuführenden Schadgases dient.

10. Verbrennungseinrichtung zur Schadgasverbrennung nach Anspruch 9, dadurch gekennzeichnet, dass der Rekuperator (44) in Strömungsrichtung des Abgases gesehen, nach einer Aufheizzone (48) für das Schadgas eine Wärmeaustauschzone (49) zur Aufbereitung von Warmwasser aufweist.

11. Verbrennungseinrichtung zur Schadgasverbrennung nach Anspruch 9 oder 10, dadurch gekennzeichnet, dass vorgewärmtes Schadgas führende Schadgaskanäle (53) des Rekuperators (44) gleichmässig über die Flammenfront verteilt in den Brennraum (47) münden.

**Claims**

1. Device for combustion and heating, with a ceramic burner head having throughflow ducts for fuel and oxidising agent which extend parallel to one another towards the burner mouth and which have a slot-form cross-section and are adjacently arranged along their elongated sides, and with a ceramic recuperator having throughflow ducts of slot form for hot gas flowing out of the combustion chamber and for a medium which is to be heated, the latter ducts being situated parallel to one another and likewise arranged to be adjacent along their elongated sides, characterized in that the burner head (1, 23, 43) and the recuperator (2, 25, 44) are connected to one another to form an integral ceramic block in such a manner that between the burner mouth (3, 29, 45) of the burner head and the hot gas inlet (4, 33, 46) at one end of the recuperator there is arranged a combustion chamber (5, 31, 47) which is incorporated in the block and which is situated in alignment with the burner head and the recuperator.

2. Device for combustion and heating according to claim 1, characterized in that walls constituting the boundaries of the combustion chamber (5) are lined with insulating panels (8) of ceramic material which has a large number of pores.

3. Device for combustion and heating according to claim 1 or 2, characterized in that the recuperator (25) has a preheating zone (26) serving for the preheating of combustion air.

4. Device for combustion and heating according to one of claims 1, 2 or 3, characterized in that the recuperator (2, 59) comprises as viewed in the direction of flow of the hot gas first of all a heat exchange zone (13, 65) for heating a medium used for heating purposes and then a heat exchange zone (14, 66) for the heating of service water.

5. Device for combustion and heating according to one of the preceding claims, characterized in that the recuperator (2) comprises, in the throughflow ducts (12) conducting the medium to be heated, inserts (20) for deflecting the flow.

6. Device for combustion and heating according to one of the preceding claims, characterized in that wall supports (56) are positioned in throughflow ducts (51, 53) of the recuperator (44).

7. Device for combustion and heating according to claim 6, characterized in that the wall supports (56) are constructed as webs which are situated in the direction of flow of the media and which comprise, at least in the regions of the inlets and outlets (50, 52, 54) for the medium, throughflow apertures (57) for the medium.

8. Device for combustion and heating according to one of the preceding claims, characterized in that a throughflow controller (87) controlling the hot gas flow is provided, and a warm water conduit (75) conducting the warm service water prepared in the second heat exchange zone (66) is taken to a storage tank (77) for warm water via a heat exchanger (74) through which the heating water can flow, that the heat exchanger (74) is connected to the heating water circuit via a bypass (73) between the delivery conduit (67) and the return flow conduit (69), that the quantity of heating water flowing in the bypass (73) is controlled by a controller (83) in dependence on the temperature in the warm water storage tank (77), and that there is provided a controller (85) for controlling the supply of fuel to the burner head (58) and for controlling the flow of hot gas in the recuperator (59) in dependence on the temperature of the heating water in the delivery conduit (67).

9. Use of a combustion device according to one of the preceding claims for noxious gas combustion, the recuperator (44) being used for preheating the noxious gas being introduced into the combustion chamber (47).

10. Combustion device for the combustion of noxious gas according to claim 9, characterized in that as viewed in the direction of flow of the exhaust gas the recuperator (44) comprises a heat exchange zone (49) for the preparation of hot water downstream of a heating zone (48) for the noxious gas.

11. Combustion device for the combustion of noxious gas according to claim 9 or 10, characterized in that noxious gas ducts (53) of the recuperator (44) which conduct preheated noxious gas debouch into the combustion chamber (47) in an arrangement uniformly distributed over the flame front.

## Revendications

1. Installation pour la combustion et le chauffage comprenant une tête de brûleur en céramique ayant pour le combustible et l'agent oxydant des canaux d'écoulement dirigés parallèlement entre eux vers l'orifice du brûleur, présentant une section transversale en forme de fente et disposés de manière adjacente le long de leur côté allongé, et un récupérateur en céramique ayant pour le gaz chaud qui sort de la chambre de combustion et pour un milieu à chauffer des canaux d'écoulement en forme de fente dirigés parallèlement les uns aux autres et également adjacents le long de leur côté allongé, caractérisé en ce que la tête du brûleur (1, 23, 43) et le récupérateur (2, 25, 44) sont reliés l'un à l'autre en un bloc céramique unitaire de manière à former entre l'orifice du brûleur (3, 29, 45) de la tête du brûleur et l'entrée (4, 33, 46) pour le gaz chaud se trouvant du côté frontal du récupérateur une chambre de combustion (5, 31, 47) intégrée en bloc aligné par rapport à la tête du brûleur et au récupérateur.

2. Installation pour la combustion et le chauffage suivant la revendication 1, caractérisé en ce que des parois fermant la chambre de combustion (5) vis-à-vis de l'extérieur sont recouvertes de plaques isolantes (8) en matériau céramique ayant beaucoup de pores.

3. Installation pour la combustion et le chauffage suivant la revendication 1 ou 2, caractérisé en ce que le récupérateur (25) présente une zone de préchauffage (26) servant à préchauffer l'air de combustion.

4. Installation pour la combustion et le chauffage suivant l'une des revendications 1, 2 ou 3, caractérisé en ce que le récupérateur (2, 59) présente, considéré suivant le sens d'écoulement du gaz chaud, tout d'abord une zone d'échange de chaleur (13, 65) destinée à chauffer un milieu servant à des fins de chauffage et à la suite de cela une zone d'échange de chaleur (14, 66) servant à réchauffer de l'eau sanitaire.

5. Installation pour la combustion et le chauffage suivant l'une des revendications précédentes, caractérisé en ce que le récupérateur (2) présente dans les canaux d'écoulement (12) dans lesquels passe le milieu à chauffer, des chicanes (20) de déviation du courant.

6. Installation pour la combustion et le chauffage suivant l'une des revendications précédentes, caractérisé en ce que dans des canaux d'écoulement (51, 53) du récupérateur (44) sont introduits des appuis de paroi (56).

7. Installation pour la combustion et le chauffage suivant la revendication 6, caractérisé en ce que les appuis de paroi (56) sont agencés en entretoises s'étendant dans le sens d'écoulement des milieux et présentant au moins dans la région de l'entrée et de la sortie (50, 52, 54) du milieu des ouvertures de passage (57) pour le milieu.

8. Installation pour la combustion et le chauffage suivant l'une des revendications précédentes, caractérisé en ce qu'il est prévu un régulateur de débit (87) commandant le courant de gaz chaud et un conduit pour de l'eau chaude amenant de l'eau sanitaire chaude produite dans la seconde zone d'échange de chaleur (66) à un réservoir (77) pour l'eau chaude par l'intermédiaire d'un échangeur de chaleur (74) qui peut être parcouru par de l'eau de chauffage, en ce que l'échangeur de chaleur (74) est raccordé au circuit d'eau de chauffage par une dérivation (73) comprise entre la canalisation montante (67) et la canalisation de retour (69), en ce que la quantité d'eau de chauffage s'écoulant dans la dérivation (73) peut être commandée par un régulateur (83) en fonction de la température dans le réservoir (77) pour l'eau chaude et en ce qu'il est prévu un régulateur (85) pour commander l'arrivée de combustible à la tête du brûleur (58) et du courant de gaz chaud dans le récupérateur (59) en fonction de la température de l'eau de chauffage dans la canalisation montante (67).

9. Utilisation d'une installation pour la combustion suivant l'une des revendications précédentes pour la combustion de gaz polluant, le récupérateur (44) servant à préchauffer le gaz polluant introduit dans la chambre de combustion (47).

10. Installation de combustion pour la combustion de gaz polluant suivant la revendication 9, caractérisé en ce que le récupérateur (44) présente, considéré suivant le sens d'écoulement du gaz résiduaire, en aval d'une zone de chauffage (48) du gaz polluant, une zone d'échange de chaleur (49) de traitement d'eau chaude.

11. Installation de combustion destinée à la combustion de gaz polluant suivant la revendication 9 ou 10, caractérisé en ce que des canaux (53) du récupérateur (44) qui sont destinés au passage du gaz polluant préchauffé débouchent dans la chambre de combustion (47) en étant répartis d'une manière uniforme sur le front de flammes.

FIG. 1

# FIG. 2

# FIG. 3

FIG. 4

FIG. 5